# EUROPEAN PATENT APPLICATION

(11) **EP 0 984 567 A1**
(43) Date of publication of application: **08.03.2000**
(21) Application number: 98307029.3
(22) Date of filing: 02.09.1998
(51) Int. Cl.: H04B 7/185

(54) **Broadcast scheme in communication cells**

(71) Applicant: ICO Services Ltd., London W6 9BN (GB)
(72) Inventor: Mouly, Michel, Palaiseau (FR); Chomet, Patrick, London, NW2 3SN (GB); Grayson, Mark, Chiswick, London, W4 2QT (GB)
(74) Representative: Read, Matthew Charles

(57) **Abstract**

A cell broadcast scheduling scheme for a cell broadcast signal BCCH in a telecommunications system, is configured so that the data trasnmitted to user terminals (UTs) is categorised according to different priorities. Data of the highest priority (category A) is encoded into blocks which have a recurrence that itself is encoded into each successive transmitted block irrespective of whether the block contains category A information. The occurrence of blocks of other categories is encoded in the blocks containing category A information such that the A blocks contain data concerning the occurrence of blocks containing data of categories B1 and C1. The blocks containing data of categories B1 and C1 themselves contain data concerning the occurrence of blocks containing data of categories B2 etc. The scheduling configuration can be changed with time and the user terminals can respond to the changes in the scheduling scheme without loss of data. Also, new categories can be introduced without affecting operation of UTs currently using the system.

## Description

This invention relates to a method of operating a cellular mobile telecommunications system and in particular to an improved way of updating system information by means of cell broadcast signals, and has particular but not exclusive application to a satellite telecommunications system.

Terrestrial mobile telecommunications systems are well known and a number of different systems have developed which operate according to different standards. These public land mobile networks (PLMNs) may operate according to analog or digital standards. In Europe, the Far East, excluding Japan and elsewhere, the Global System Mobile (GSM) network has become popular, whereas in USA, the Advanced Mobile Phone Service (AMPS) and the Digital American Mobile Phone System (DAMPS) are in use, and in Japan, the Personal Handiphone System (PHS) and the Personal Digital Communication (PDC) network are used. More recently, proposals have been made for a Universal Mobile Telecommunications System (UMTS). These networks are all cellular and land-based with transmitter/receivers which communicate with mobile user terminals.

Considering for example the GSM system, individual cells of the mobile network are served by a series of geographically spaced, terrestrial base station subsystems (BSS) which each comprise a base transceiver stations (BTS) which are coupled through base station controllers (BSCs) to a mobile switching centre (MSC) which may provide a gateway out of the network to a conventional public switched telephone network (PSTN). The PLMN includes a home location register (HLR) which stores information about the subscribers to the system and their user terminals (UTs). When a UT is switched on, it registers with the HLR. If the user roams to a different GSM network, the user terminal registers with a visitor location register (VLR) of the visited network, which communicates with the HLR of the home network for routing and other purposes. DAMPS, PHS and PDC networks have a generally similar architecture.

The telephone call is routed to the subscriber's UT through the MSC, to the BSC and then to the selected BTS, which provides a full duplex channel to the UT. The channel comprises a downlink channel from the BTS to the UT and an uplink channel from the UT to the BTS. The channels include time division multiple access (TDMA) time slots on different frequencies allocated on initiation of the call.

In a GSM system, the telephone call is directed over a dedicated traffic channel or TCH. Each TCH has an associated slow rate control channel or SACCH, which is interleaved with the TCH. These channels are described in more detail on pp 195 - 201 of "The GSM System for Mobile Communications" by M. Mouly and M-B. Pautet, 1992 Cell & Sys, ISBN: 2-9507190-0-7.

Also, a number of common channels are provided for all UTs within a particular cell. A broadcast control channel BCCH is broadcast from the BTS to all UTs within a particular cell, which provides information that identifies the cell to each UT. The BCCH is received by the UT in idle mode i.e. when no call is being made. Each cell has is own BCCH, so the relative signal strengths of the BCCHs at the UT can be used to determine which cell can best be used for TCH/SACCH communication with the UT. Other system information may be transmitted to the UTs of a particular cell in the BCCH. Another common channel is the downlink paging logical channel PCH. This is used to transmit paging messages to a UT, for example to alert the user of the UT to an incoming call. An access grant channel AGCH indicates to the UT a channel allocated by the network, to be accessed by the UT for speech communication (TCH/SACCH) in order to receive the incoming call.

In addition to these downlink common channels, there is an uplink common channel which allows UTs within a cell to transmit access requests to the network, when it is desired to make a call from the UT. These requests occur essentially randomly in time and the channel is called the random access channel RACH.

A number of different mobile telecommunication systems have been proposed that use satellite communication links to the mobile user terminals. One network known as the IRIDIUM ™ satellite cellular system is described in for example EP-A-0365885 and US Patent No. 5 394 561 (Motorola), which makes use of a constellation of so-called low earth orbit (LEO) satellites, that have an orbital radius of 780 km. Mobile user terminals such as telephone handsets are configured to establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). These orbits are also known as intermediate earth orbits (IEOs). The ICO ™ satellite cellular system as described in GB-A-2 295 296, is an example. With the ICO™ system, the satellite communication link does not permit communication between adjacent satellites and instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM.

In satellite communications networks, ground stations are located at different sites around the world in order to communicate with the orbiting satellites. In the ICO™ system and others, a visitor location register is associated with each of the satellite ground stations, which maintains a record of the individual user terminals that are making use of the particular ground station. Each satellite has an antenna which produces an array of spot beams directed towards the earth, that act as cells and correspond to the cells of a conventional terrestrial mobile network, although the cells produced by the spot beams sweep over the surface of the earth as the satellite moves in its orbit. A number of common channels are provided in each spot beam for UTs in a particular cell, including a BCCH, PCH, AGCH and RACH. A high penetration notification channel may be included, as described in WO-A-98/23045. When a call is made, referred to herein as dedicated mode, communication with an individual UT occurs through a TCH/SACCH. When no call is being made, referred to herein as idle mode, all the UTs in a particular cell receive a BCCH for the cell which provides them with system information, in a similar manner to conventional terrestrial GSM, and the BCCHs for adjacent cells are monitored by the UTs for cell selection purposes.

The system information transmitted in a conventional BCCH is repeated according to a fixed scheme which may involve unnecessary repetition of data that is not crucial to satisfactory operation of UTs in dedicated mode. This unnecessarily uses up timeslots in the BCCH and degrades efficiency. The problem is particularly acute in a satellite system where bandwidth is at a premium.

The present invention provides a solution to this problem. According to the present invention there is provided a cell broadcast signal containing system information for user terminals in a cellular telecommunications system, the information being classified into data of different categories that are transmitted at individual rates according to respective priorities associated with the categories. The rates for the individual categories may be different and can be altered. Thus, the transmitted data can be prioritised according to the needs of the user terminals.

The data categorisation according to the invention also permits new categories of data to be defined and incorporated into the signal such that existing user terminals that do not recognise the new categories can still respond to the broadcast signal and new user terminals with additional functionality can respond to the new data categories.

The data may be transmitted in a sequence of data blocks containing the system information according to the different categories. Blocks containing data in one of the categories may include information concerning which of the blocks contain data of at least one other of the categories. The categories may include a first category of a first priority, and at least one other category of at least one priority other than said first priority, with the blocks each including information concerning which of the blocks contain data in the first category. There may be second and third categories with individual priorities, and the blocks that contain data of the first category may also contain data concerning which of the blocks contain data according to the second category, and the blocks that contain data of the second category containing data concerning which of the blocks contain data according to the third category.

The invention also includes a method of broadcasting system information for user terminals in a cellular telecommunications system, the information being classified into data of different categories, comprising transmitting the data of each said category at an individual rate according to respective priorities associated with the category.

The invention furthermore includes a user terminal to receive a cell broadcast signal containing system information for user terminals in a cell of cellular telecommunications system, the information being classified into data of different categories that are transmitted at individual rates according to respective priorities associated with the categories, the user terminal comprising a receiver to receive the cell broadcast signal and decode the data therein classified according to said categories.

The invention also provides a method of receiving a cell broadcast signal containing system information for user terminals in a cell of cellular telecommunications system, the information being classified into data of different categories that are transmitted at individual rates according to respective priorities associated with the categories, the method decoding the data according to said categories from the cell broadcast signal.

The invention also includes a transmitting station for a mobile telecommunications system including a transmitter configured to transmit the cell broadcast signal of the invention.

The invention furthermore provides a method of transmitting a cell broadcast signal for a mobile telecommunications system including transmitting data for at least one cell broadcast signal of the invention, towards an earth orbiting satellite for onward transmission to user terminals in at least one cell.

In another aspect, the invention provides a cell broadcast signal containing system information for user terminals in a cellular telecommunications system, the information being classified into data of first and second different categories which is transmitted in blocks at individual rates according to respective priorities associated with the categories, wherein blocks containing data of the second priority contain information indicating when a block containing data according to the first priority will occur.

The invention has the advantage of making more efficient use of the data capacity of the cell broadcast signal, permitting improved use of the telecommunications system.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a schematic frequency/time diagram illustrating time slots for the FDMA transmission scheme;
Figure 3 is a schematic block diagram of the circuits of satellite 3a;
Figure 4 is a schematic diagram of the cells produced by the spot beams produced by the satellite 3a;
Figure 5 is a schematic diagram of a mobile user terminal;
Figure 6 is a schematic block diagram of the circuits of the user terminal shown in Figure 5;
Figure 7 is a schematic illustration of block organisation in the BCCH;
Figure 8 illustrates a logical tree of relationships between the data categories; and
Figure 9 is a schematic illustration of the data capacity distribution in a BCCH organised in accordance with the invention.

### Overview of network

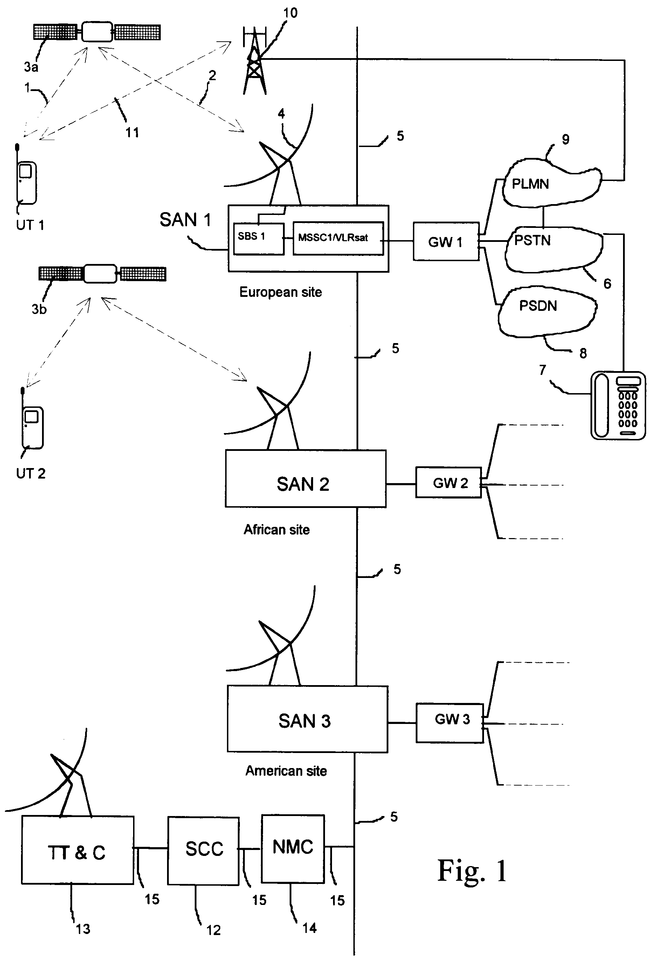

Referring to Figure 1, a schematic block diagram of a satellite mobile telecommunication network is shown corresponding to the ICO™ network. A mobile user terminal UT 1 in the form of a mobile telephone handset can communicate on a radio channel over a communication path 1, 2 via an earth orbiting satellite 3a with a land-based satellite access node SAN1. As shown schematically in Figure 1, SAN 1 is provided with an antenna 4 which can track the orbiting satellite.

A number of the satellite access nodes SAN 1, 2, 3, etc are connected together to form a backbone network 5, which is connected through a number of gateways GW 1, 2, 3, etc to conventional land-based telephone networks. For example, the gateway GW1, is connected to a land-based public switch telephone network (PSTN) 6, which permits connection to be made to a conventional telephone set 7. The gateway GW1 is additionally connected to a public switch data network (PSDN) 8 and a public local mobile network (PLMN) 9. Each of the gateways GW1, 2, 3 may comprise existing International Switching Centres (ISCs) or mobile switching centres (MSCs) of the type used in GSM mobile networks.

As shown in Figure 1, the handset UT 1 can also communicate with the conventional land-based mobile network PLMN 9, which is shown schematically to include a transceiver station 10 that establishes a duplex link 11 with the user terminal UT 1. In this example, the PLMN 9 is a GSM network. For a fuller understanding of GSM, reference is directed to the various GSM Recommendations issued by the European Telecommunications Institute (ETSI). Also reference is directed to "The GSM System for Mobile Communications" ***supra*****,** for a more readable overview.

The satellite network is designed to provide worldwide coverage and the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system diversity and redundancy. Additional satellites may be included in the constellation in order to provide further redundancy.

The satellites may be arranged in a MEO constellation, for example with an orbital radius of 10,355 km, although the invention is not restricted to a particular orbital radius. In this embodiment, satellites 3a, 3b are shown in a common orbit and the satellites are tracked by the antenna arrangement of each SAN. The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the five dish antennas 4 for tracking the satellites, the SBS 1 including transmitter and receiver circuits with amplifiers, multiplexers, demultiplexer and codecs. A mobile satellite switching centre MSSC 1 is coupled to SBS 1 and includes a satellite visitor location register VLR_{SAT} 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW1 so as to provide an output connection to PLMN 9, together with PSDN 8 and PSTN 6. It will be understood that all the SANs are of similar construction with a respective VLR_{SAT} to maintain a record of the subscribers registered.

The VLR_{SAT} 1 maintains a record of each of the subscribers currently registered, namely the identity of each user that is making use of the SAN 1 for signal communication.

In Figure 1, the SAN 2 is shown communicating with user terminal UT 2 via satellite 3b. For further details of the network, reference is directed to GB-A-2 295 296 and EP 97302222.1 filed on 1st April 1997.

The satellites 3a, 3b are in non-geostationary orbits and comprise generally conventional hardware such as the Hughes HS 601. They may include features disclosed in GB-A-2 288 913. Each satellite 3a, 3b is arranged to generate an array of radio spot beams covering a footprint on the earth beneath the satellite, each beam including a number of different frequency channels and time slots as described in GB-A-2 293 725. The spot beams thus provide adjacent cellular areas which correspond to the cells of a conventional land-based mobile telephone network.

The satellites are controlled by means of a satellite control centre (SCC) 12 and a telemetry tracking and control station (TT&C) 13, which are connected to a network management centre (NMC) 14 through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

### Channel Configuration

During a telephone call, each of the handsets communicates with a respective SAN via one of the satellites. Thus for example, handset UT 1 communicates with SAN 1 via satellite 3a via paths 1, 2 shown in Fig. 1. A full duplex communication path is provided between the UT and the SAN. As referred to herein, communication from the SAN to the UT via the satellite is referred to as a "downlink", and communication directed from the UT via the satellite to the SAN is referred to as an "uplink".

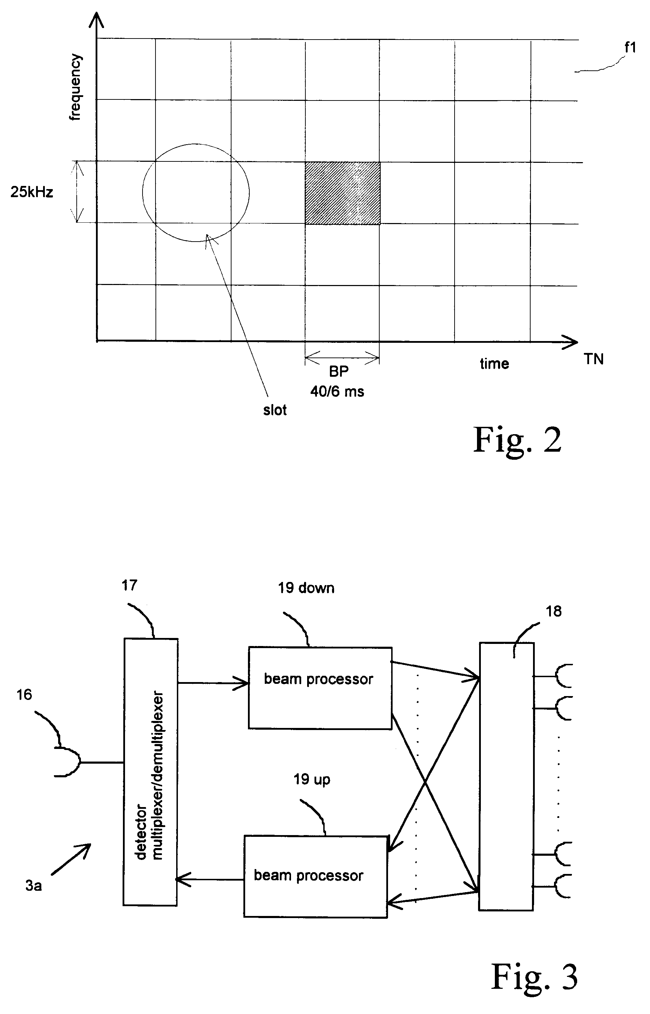

The general configuration of the transmitted signals is in some respects similar to those used for conventional GSM transmissions in a PLMN and makes use of a frequency diverse time division multiple access (TDMA) scheme. Referring to Figure 2, the basic unit of transmission between the SAN and UT is a series of about 100 modulated digital bits, which is referred to as a burst. Bursts each have a finite duration and occupy a finite part of the radio spectrum. Thus, they are sent in time and frequency windows which are referred to as slots. The slots are positioned every 25 kHz and recur in time every 40/6 ms. In the time domain, the slots are given a timeslot number TN This is also referred to as an absolute timeslot number ATN when the TN is referenced to a particular cycle of signals transmitted on succesive timeslots. The duration of each slot is referred to as a burst period or BP. A graphical representation of a slot in the time and frequency domain is shown in Figure 2.

The signal transmission scheme includes channels for providing communication between the UTs individually and one of the SANs via a satellite, together with a number of common channels for all UTs within the cell defined by a particular satellite spot beam. The configuration of some of the signal channels will now be described in more detail.

### Individual Channels

For speech transmission, data is sent on an individual traffic channel TCH. Each TCH is provided with an associated slow rate control channel or SACCH. Each TCH consists of one slot every 6 BP and comprises a cycle of 25 slots. The SACCH is multiplexed in blocks each consisting of 12 consecutive slots. Two SACCH blocks are transmitted for every 25 slot cycle of the TCH and the remaining slot is used to transmit a timing reference so as to make up a 25 slot SACCH message for each 25 slot cycle of TCH. The TCH/SACCH is transmitted when the UT is in dedicated mode i.e. during a call.

### Common Channels

In addition to the channels TCH/SACCH for the individual UTs, a number of common channels are provided for all UTs within each cell corresponding to one of the satellite's spot beams, which will now be described in more detail.

A broadcast control channel BCCH is broadcast from the satellite to all UTs within a particular cell. The BCCH provides information which identifies the cell to the UT, which is received by the UT in idle mode i.e. when no call is being made. As each cell has is own BCCH, the relative signal strengths of the BCCHs at the UT can be used to determine which cell is to be used for TCH/SACCH communication with the UT.

System information concerning operational parameters for the UTs of a particular cell is transmitted to the UTs in the cell in BCCH messages. Each BCCH message consists of a number e.g. 4 slots, and is transmitted periodically e.g. every 100 BP.

The common channels also include a downlink paging logical channel PCH. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH consists of e.g. 1 to 10 slots every 25 BP and the AGCH consists of e.g. 2, 4, 6, 8, 10 or 12 slots every 25 BP.

In the ICO™ network, an additional high penetration notification (HPN) channel is provided on the downlink for paging in the event that PCH paging is unsuccessful, for example when the reception of the user terminal is partially screened by buildings or the like. Reference is directed to our WO-A-98/23045 in which the HPN system is described in more detail.

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

When a call is initiated from the UT, a RACH transmission is made by the UT in order to request a TCH/SACCH for the call from the SAN, and the UT then listens to all AGCH messages from the SAN/satellite to determine details of the channel to be allocated for the call. The AGCH messages comprise two bursts in this example. The UT similarly listens to PCH messages for calls initiated from the network via the SAN. For this purpose, the UT listens to 1 burst every 50, 150, 200, 300, 400 or 600 BPs in order to locate PCH messages.

The common channels are transmitted on beacon frequencies for the cell concerned such that BCCH is transmitted on frequency *f1*, PCH/AGCH on *f2* and RACH on *f3*. Adjacent cells have different beacon frequencies to distinguish them from one another. The beacon frequency slot *f1* is shown schematically in Fig. 2 although in practice the beacon frequencies may themselves cycle between different values within a respective allocated frequency slot to provide a cw frequency acquisition portion at a first frequency followed by a data burst at a second frequency.

A cell broadcast channel (CBCH) is provided for reception by all UTs within the cell, which contains data about the BCCH beacon frequencies for adjacent cells so that the BCCHs for adjacent cells can be monitored during the idle mode, to permit a cell selection to be made on the basis of received signal quality, when the UT changes to dedicated mode for commencement of a call.

Information concerning the configuration of the common channels in a particular cell is transmitted to the UTs of the cell as system information in the BCCH messages in order to allow the operating parameters of the UTs to be set accordingly.

The BCCH messages thus contain system information for the UTs received during the idle mode, to set the UTs for operation during dedicated mode. In accordance with the invention, the BCCH data is scheduled for transmission according to a predetermined priority scheme, as will be described in more detail hereinafter.

### Satellite

A schematic diagram of the major signal processing components of the satellite is given in Figure 3. Signals transmitted from one of the SANs are received by antenna 16 and directed to a detector/multiplexer/demultiplexer circuit 17. It will be understood that the signals transmitted from the SAN to the satellite contains a large number of TCH/SACCHs that are to be directed to individual UTs by the satellite. To this end, the satellite includes a plurality (for example 163) of antennas 18 that produce individual spot beams that correspond to a cellular configuration as previously described. A beam forming processor circuitry configuration 19_{down} receives the various TCH/SACCHs that are demultiplexed by circuit 17 and assembles them into multiplexed signals directed on 163 outputs to the spot beam antennas 18. The circuitry 19_{down} is also configured to include the downlink common control channels for each of the spot beams, including the BCCH, PCH and AGCH, on the basis of data transmitted to the satellite from the SAN.

For signals on the uplink from the individual UTs to the SAN, the various transmissions including RACH are received by the spot beam antennas 18 and directed to processing circuitry 19ᵤₚ which combines the various channels and passes them to the multiplexer configuration in circuit 17 for transmission through the antenna 16 to the SAN.

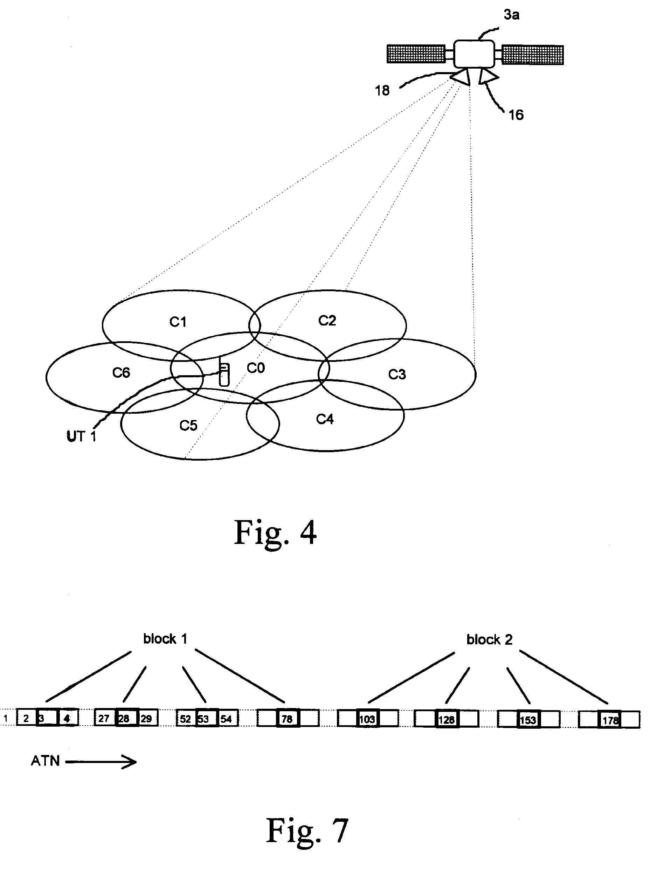

An example of cells C0 - C6 produced by the footprints of seven of the 163 spot beams from antenna 18 is shown schematically in Figure 4. The user terminal UT 1 lies within cell C0 but also can monitor the BCCHs of adjacent cells C1 - C6 and cells produced by other satellites that are within range (not shown).

It will be understood that the foregoing description of the satellite circuitry is schematic and for further details, reference is directed to GB-A-2 288 913 ***supra*****.**

### User terminal (UT 1)

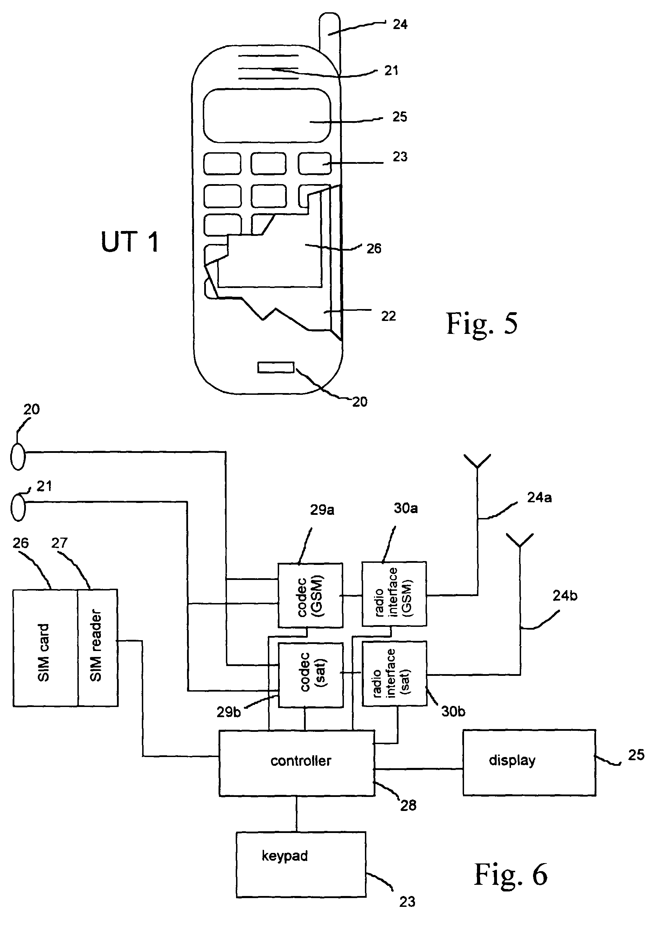

The mobile user terminal UT 1 is shown in more detail in Figures 5 and 6. It comprises a hand held device which is generally similar to a mobile telephone used for conventional terrestrial digital networks. It is powered by a rechargeable battery (not shown) and is configured to operate with both the local terrestrial cellular network and the satellite network. Thus, in the example shown in Figure 1, the mobile handset UT 1 can operate either according to a land-based GSM protocol or according to the satellite network protocol. A shown in Figure 4, the handset comprises a microphone 20, a loudspeaker 21, a battery 22, a keypad 23, antennas a, 24b and a display 25. The handheld unit UT 1 also includes a subscriber identification module (SIM) smartcard 26. The circuit configuration of the handset UT 1 is shown in block diagrammatic form in Figure 5. The SIM card 26 is received in an SIM card reader 27 coupled to a controller 28, typically a microprocessor. The microphone and loudspeaker 20, 21 are coupled to first and second codecs 29a, 29b coupled to conventional radio interfaces 30a, 30b connected to the antennas a, 24b so as to transmit and receive communication signals, in a manner well known ***per se***. The handset is capable of dual mode operation, with the codec 29a, radio interface 30a and antenna a being used with the GSM PLMN 9, and corresponding circuits 29b, 30b and 24b being used with the satellite network.

### Location Updating

The user terminal, when used with the satellite network can perform a location updating function to provide an estimation of the location of the terminal relative to the earth's surface and to convey the location information to the SAN for use in cell selection. This is carried out by measuring the propagation delay and doppler shift for signals received from one or more of the satellites 3 at the user terminal UT 1 using its controller 28. The resulting positional data is then transmitted from the user terminal to the SAN via satellite 3a. This process is described in more detail in our GB-A-2 321 812.

### Service provision

The described network can provide service to customers in a number of different ways. For example, communication may be provided from UT 1 to UT 2 using the satellite backbone network 5. Alternatively, telephone communication can be established between the telephone set 7 and UT 1 either via SAN 1 and satellite 3a, or, through PLMN 9, antenna 10 and link 11. For a further description of service options, reference is directed to our EP 97302222.1 filed on 1 April 1997.

### BCCH Scheduling

In accordance with the invention, the system information conveyed in the BCCH to UTs within the cell is scheduled in order to optimise the capacity of the BCCH. The UT is provided with the minimum system information needed according to the current status of the cell in order to perform its functions satisfactorily in the dedicated mode. In accordance with the invention, the BCCH system information is classed into different categories A, B, C etc shown in Table 1.

**Table 1**

| Category | Nature of the system information | Function | permissible delay |
|---|---|---|---|
| A | Cell selection parameters | Information needed to determine the potential use of the cell by the UT (paging, access, barring...) | Delay to find a first cell after switch-on, hence delay till first call after switch-on |
| B1 | Basic idle mode parameters | Information needed to receive the paging channel PCH in the cell | Delay from choice of cell to reception of paging |
| B2 | Supplementary idle mode parameters | Information needed for various secondary idle mode tasks such as listening to CBCH and monitoring neighbour cells | Delay from choice of cell to reception of CBCH and quick scanning of neighbourhood |
| B3 | Localisation parameters | Information needed to determine the localisation and hence deciding when to do a location updating | Delay from choice of cell to determination whether a location updating is needed |
| B3bis | | | |
| B3ter | | | |
| C1 | Minimal access parameters | Information needed to access the cell | Delay from switch-on to first call |
| (C2) | (Sent on the AGCH: access repetition parameters) | Spare | |
| C3 | Dedicated mode parameters | Information useful to have, but not absolutely necessary before going to dedicated mode | Non critical: if not available, dedicated mode parameters are defaulted value until received on SACCH |
| D | HPN mode parameters | Information allowing to go to HP mode, to be stored and used when leaving coverage or switch-on if out of coverage | Non critical |
| E | General information | Other information to be stored and used when out of coverage (for the moment this is limited to the list of BCCH frequencies in a wide area) | Non critical |

It can be seen from Table 1 that BCCH system information of types A, B1 and C1 are the most critical and should be transmitted with relatively high priority whereas the other categories can be transmitted with a lesser priority. Thus, category A system information should be accessed first by the UT. All the messages sent on the BCCH provide sufficient information to indicate when the next category A message is normally to be transmitted, as will now be explained.

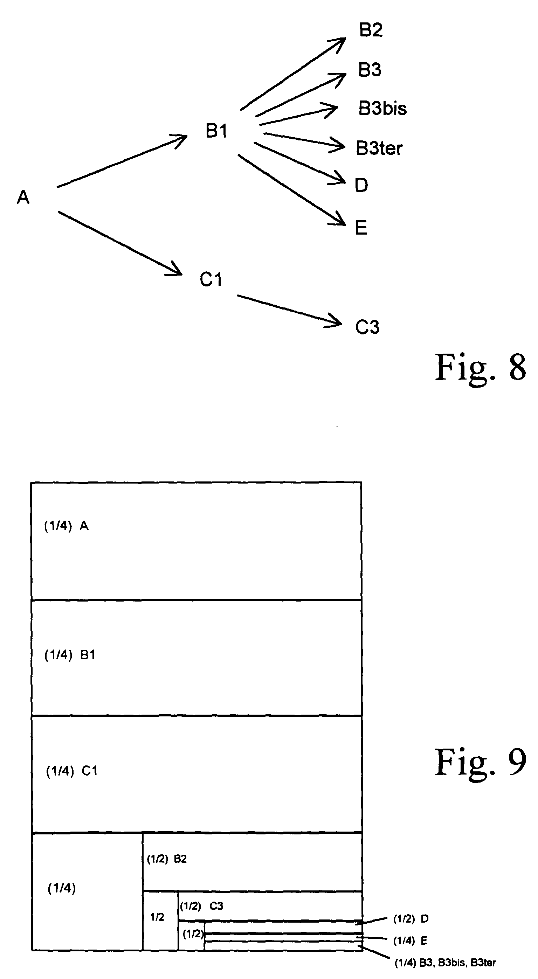

Referring to Figure 7, the time slots of the BCCH are illustrated schematically. As previously explained, the BCCH messages are transmitted in blocks consisting of four time slots, repeated every 100 BP. The four time slots are non-contiguous in time. In this example, the first BCCH message block consists of the four time slots ATN3, 28, 53 and 78. The next message block comprises time slots ATN103, 128, 153 and 178, ie spaced from the previous message by 100 BP. The pattern is repeated every 100 BP thereafter to provide subsequent BCCH message blocks.

### Scheduling of Category A data

Each BCCH message block includes data giving the relative position of the next block containing category A data. In addition, each message is preferably provided with data concerning the recurrence of blocks with category A data in order to allow the UT a second attempt to decode a category A message if it fails to do so on a first attempt. An example is set out in Table 2.

**Table 2**

| Block No. | ATN of the bursts of the block | Information type | A scheduling |
|---|---|---|---|
| 1 | 3, 28, 53, 78 | Other than A | 001 01 (cycle 4, next block is A) |
| 2 | 103, 128, 153, 178 | A | 001 00 (cycle 4, this block is A) |
| 3 | 203, 228, 253, 278 | Other than A | 001 11 (cycle 4, next but 2 block is A) |
| 4 | 303, 328, 353, 378 | Other than A | 001 10 (cycle 4, next but 1 block is A) |
| 5 | 403, 428, 453, 478 | Other than A | 001 01 (cycle 4, next block is A) |
| 6 | 503, 528, 553, 578 | A | 001 00 (cycle 4, this block is A) |
| | and so on | | |

In this example, the category A messages have a recurrence of 4 meaning that each fourth block on the BCCH carries category A information. Thus, in Table 2 the second and sixth blocks include category A information and the other blocks include schedule data indicating when the next category A block is to occur.

In the "A scheduling" column of the Table, a three bit code "001" is shown, which indicates the recurrence of BCCH messages containing category A information. Thus, in this example, the recurrence or cycle is 4 because category A information occurs in every fourth BCCH message block. The column also includes a two bit code, which indicates how many blocks are to go before the next occurrence of a block with category A information. The two bit code "01" indicates that the next block includes category A information and the code "00" indicates that the block itself contains category A information. The other code combinations are as shown in the Table.

Thus, when a UT enters the cell and successfully decodes a first block of the BCCH message, it is then able to schedule reception and decoding of category A information. The three bit code "001" can be changed so as to alter the recurrence from the value of 4 shown in Table 2. For example, the recurrence could be changed to value 1 so that all BCCH blocks convey category A information, which is useful for fully barred cells, not suitable for paging, access or HPN reception. A recurrence of 2, wherein each second BCCH block carries category A information, or 3, 4, 6 or 8 can be utilised. The value of recurrence selected constitutes a trade-off between the speed at which UTs find and select cells based on the category A data and the remaining BCCH capacity for other applications.

In view of the fact that the recurrence can be changed in use, the UTs are configured so that in the event of a reception error, they make use of the schedule information received and then make a second attempt according to the receive scheduling information. This permits the UT to use updated scheduling information which may occur when the schedules are changed.

### Scheduling of other categories

In accordance with the invention, the scheduling of each category of block type, apart from category A, is given in another category of block, in terms of a cycle length (recurrence) and list of relative phases (the number of blocks till the next occurrence). The scheduling information forms a tree with category A blocks at the root. A typical tree is illustrated in Figure 8.

The different cycles for the different categories of blocks are not necessarily the same as each other or as the scheduling for category A blocks. Furthermore, in some cases, the blocks can be small enough so that two different blocks fit into one BCCH message. Thus, each different category of BCCH information (A, B, C etc) can be transmitted with different priorities, at different rates and with different phases.

### First example

In the following simple example, a single block is used per message and a single phase per block. Cycles are organised hierarchically according to the following series: 4, 8, 16, 32, 64, 192 where each number is a multiple of the previous one. Thus, according to this example a full cycle of the prioritised, scheduled BCCH messages comprises 192 blocks.

The cycles and absolute phases are set out in Table 3. It will be understood that the absolute phase shown in Table 3 comprises the position of the commencement of a particular block in the overall 192 block cycle.

**Table 3**

| | Cycle | Absolute phase | Cycle duration in seconds | Percentage of BCCH |
|---|---|---|---|---|
| A | 4 | 1 | 2.667 | 25% |
| B1 | 4 | 3 | 2.667 | 25% |
| B2 | 8 | 2 | 5.333 | 12.5% |
| B3 | 192 | 64 | 128 | 0.5% |
| B3bis | 192 | 128 | 128 | 0.5% |
| B3ter | 192 | 0 | 128 | 0.5% |
| C1 | 4 | 1 | 2.667 | 25% |
| C3 | 16 | 8 | 10.62 | 6.7% |
| D | 32 | 16 | 21.33 | 1.7% |
| E | 64 | 32 | 42.67 | 1.7% |

The distribution of the BCCH capacity as shown in Figure 9. As previously mentioned, the complete cycle is 192 blocks long and is as follows, starting after a B3ter message i.e. at burst ATN 103:
(A C1 B1 B2 A C1 B1 **C3** A C1 B1 B2 A C1 B1 **D** A C1 B1 B2 A C1 B1 **C3** A C1 B1 B2 A C1 B1 E
A C1 B1 B2 A C1 B1 **C3** A C1 B1 B2 A C1 B1 **D** A C1 B1 B2 A C1 B1 **C3** A C1 B1 B2 A C1 B1 B3
A C1 B1 B2 A C1 B1 **C3** A C1 B1 B2 A C1 B1 **D** A C1 B1 B2 A C1 B1 **C3** A C1 B1 B2 A C1 B1 E
A C1 B1 B2 A C1 B1 **C3** A C1 B1 B2 A C1 B1 **D** A C1 B1 B2 A C1 B1 **C3** A C1 B1 B2 A C1 B1 B3bis
A C1 B1 B2 A C1 B1 **C3** A C1 B1 B2 A C1 B1 **D** A C1 B1 B2 A C1 B1 **C3** A C1 B1 B2 A C1 B1 E
A C1 B1 B2 A C1 B1 **C3** A C1 B1 B2 A C1 B1 **D** A C1 B1 B2 A C1 B1 **C3** A C1 B1 B2 A C1 B1 B3ter)

In accordance with the tree shown in Figure 8, the category A blocks of the message provide scheduling information concerning category B1 and C1 blocks as set out in Table 4.

**Table 4**

| ATN of first burst of A block | Cycle and relative phase of B1 | Cycle and relative phase of C1 |
|---|---|---|
| 103 | 8, 2 | 8, 1 |
| 503 | 8, 2 | 8, 1 |
| 903 | 8, 2 | 8, 1 |
| and so on | | |

In this example, the A, B1, and C1 blocks each of have the same cycle but it will be appreciated that this need not necessarily be the case and each may have its own cycle, with the cycle information for B1 and C1 being provided in the first burst of the category A blocks.

Similarly, the B1 blocks provide scheduling information for blocks B2, B3, B3bis, B3ter, D and E, as shown in Figure 8. The scheduling information for these various blocks is set out in Table 5, with the scheduling information being provided in the first burst of each B1 block, namely ATN 303, 703 etc.

**Table 5**

| ATN | Cycle and relative phase of | | | | | |
|---|---|---|---|---|---|---|
| | B2 | B3 | B3bis | B3ter | D | E |
| 303 | 8, 1 | 192, 61 | 192, 125 | 192, 189 | 32, 13 | 64,29 |
| 703 | 8, 5 | 192, 57 | 192, 121 | 192, 185 | 32, 9 | 64, 25 |
| 1103 | 8, 1 | 192, 53 | 192, 117 | 192, 181 | 32, 5 | 64, 21 |
| 1503 | 8, 5 | 192, 49 | 192, 113 | 192, 177 | 32, 1 | 64, 17 |
| 1903 | 8, 1 | 192, 45 | 192, 109 | 192, 173 | 32, 29 | 64, 13 |
| 2303 | 8, 5 | 192, 41 | 192, 105 | 192, 169 | 32, 25 | 64, 9 |
| and so on | | | | | | |

Similarly, the scheduling information given in the C1 blocks is set out in Table 6.

**Table 6**

| ATN of first burst of C1 block | Cycle and relative phase of C3 |
|---|---|
| 203 | 16, 6 |
| 603 | 16, 2 |
| 1003 | 16, 14 |
| and so on | |

### Second example

The scheduling scheme according to the invention allows for more complex transmission schemes for the blocks of different categories, allowing for blocks other than category A to be given a ratio of BCCH usage. A specific example in set out in Table 7. The example of Table 7 can be considered as a modification of the first example given in Table 3.

**Table 7**

| | Cycle | Absolute phase | Average recurrence in seconds | ratio of BCCH |
|---|---|---|---|---|
| A | 4 | 1 | 2.667 | 4/16 |
| B1 | 16 | 6, 11, 15 | 3.556 | 3/16 |
| C1 | 16 | 2, 6, 10 | 3.556 | 3/16 |
| B2 | 8 | 4 | 5.333 | 2/16 |
| C3 | 8 | 0 | 5.333 | 2/16 |
| B3 | 48 | 3 | 32 | 1/48 |
| B3bis | 48 | 19 | 32 | 1/48 |
| B3ter | 48 | 35 | 32 | 1/48 |
| D | 96 | 14, 46, 78 | 21.33 | 3/96 |
| E | 96 | 30, 62, 92 | 21.33 | 3/96 |

The selection of the BCCH schedule thus involves the choice of a ratio of BCCH capacity that is to be allocated to each category or system information.

In order to optimise the allocation, it is preferable to:
1. ensure that blocks of the same category are spread evenly with time through out the transmission cycle of BCCH system information
2. the category A block should be offset in time for the BCCHs of neighbouring cells in order to improve cell selection speed
3. the category B blocks should be offset between neighbouring cells also
4. category C1 blocks should follow category A blocks as soon as possible in order to reduce the time taken to prepare the UT from switch-on to be ready to assume dedicated mode for a first call.
5. category C3 should follow category C1 as closely as possible, and
6. B3, B3bis and B3ter should be spread evenly with time so as to provide useful, even if incomplete data throughout the BCCH message cycle.

### Operation of BCCH Scheduling

The provision of a BCCH to UT1 in cell C0 (Figure 4) will now be described by way of example. The BCCH scheduling is carried out in SBS1 of SAN1 and the data is encoded into the various blocks of the BCCH to achieve the scheduling configuration previously described with reference to Figures 8 and 9. When the data is scheduled according to the first example hereinbefore, a quarter of the available data capacity is used for category A, B1 and C1 data respectively, with the remaining quarter of the capacity being used for B2, C3, D, E and B3, B3bis, and B3ter data as shown in Figure 9. In regard to the category A data, the recurrence is 4, so that the A data is repeated in every fourth BCCH message block. The scheduling of the other categories of data is carried out as previously described with reference to the first example and Tables 2 to 6 hereinbefore.

The BCCH data is received by satellite 3a, which acts as a mirror, as previously described and sends the data in the beacon frequency *f*1 to cell C0 (Figure 4) to be received by UT1.

User terminal UT1 decodes the scheduling data from the BCCH blocks. The data is received by controller 28 (Figure 6) and used to schedule reception of each of the various categories of data in the BCCH. The decoded data is then used to set the operational parameters of UT1 for use in the dedicated mode. It will be understood that upon switch-on of the user terminal, any one of the various BCCH blocks may be received initially and scheduling data for the next block containing category A data can be obtained from any one of them. The category A data can then be readily decoded. Similarly, the occurrence of the other data categories can be obtained from the scheduling information in the various blocks so that each category can be readily decoded. The acquisition of the various categories of system information encoded in the BCCH data is achieved according to the prioritised needs of the UT.

### Updating BCCH schedule

The previously described organisation allows the scheduling to be changed adaptively with time. Thus for example, if the amount of category B2 data needs to be increased, the recurrence of the category A data can be reduced at SAN1 so as to increase the available capacity for category B2 data. The recurrences of any of the other categories of data can similarly be changed for this purpose. When the recurrence of the category A data is changed, the three bit recurrence code shown in Table 2 is altered to a different value in each of the BCCH blocks so that the UT can determine the occurrence of the next block containing category A data. When the scheduling is changed, an error will occur in the reception of BCCH data by the UT. However, as previously explained, the system will accept a second attempt to read the scheduled A data, so as to make use of the changed three bit scheduling code and thus acquire the data according to the new, changed scheduling scheme.

The scheduling scheme according to the invention also allows new categories of BCCH data to be introduced at a later date. New UTs with improved functionality, that are designed to respond to a newly provided category of BCCH data can be introduced to the network whilst allowing interworking with UTs currently in use that do not respond the new category. For example, a new category of BCCH data - category F, may be introduced to the scheme shown in Table 1 after the satellite network has been commissioned. Data concerning the occurrence of category F messages is provided in the blocks of another category in the manner previously described. The blocks containing category F data include scheduling data for category A messages since all blocks contain this information, as previously described. New UTs with improved functionality configured to respond to category F data will decode the category F data but old UTs will not recognise category F data and will ignore it without the category F data providing a conflict. In use, if the first message block decoded by an old UT contains category F data, the UT will determine from the block the occurrence of the next block containing category A data as previously described so as to decode the category A data and operate as previously described, but will not recognise the category F data; only a new UT with improved functionality will recognise the F data. The scheme therefore allows interworking with both the old and new UTs.

The invention is not restricted to the described signal channels and can be used with conventional GSM, or other known mobile protocols, for example with the PLMN 9 over the link 11 shown in Fig. 1. The invention also can be used with other satellite systems such as the IRIDIUM system discussed hereinbefore. Whilst the user terminals have been described as mobile, it will be understood that they may be semi-mobile, e.g. mounted on a ship or aircraft, and may actually be stationary during operation. They may handle not only voice communication but also other telecommunications traffic such as e-mail, short messages (SMS) and facsimile transmissions.

## Claims

1. A cell broadcast signal containing system information for user terminals in a cellular telecommunications system, the information being classified into data of different categories that are transmitted at individual rates according to respective priorities associated with the categories.

2. A cell broadcast signal according to claim 1 wherein the rates for the individual categories are different.

3. A cell broadcast signal according to claim 1 or 2 configured as a sequence of data blocks containing the system information according to the different categories.

4. A cell broadcast signal according to claim 3 wherein blocks containing data in one of the categories include information concerning which of the blocks contain data of at least one other of the categories.

5. A cell broadcast signal according to claim 3 or 4 wherein the different categories of system information include a first category of a first priority, and at least one other category of at least one priority other than said first priority, the blocks each including information concerning which of the blocks contain data in the first category.

6. A cell broadcast signal according to claim 5 wherein said at least one other category includes second and third categories with individual priorities, the blocks that contain data of the first category also containing data concerning which of the blocks contain data according to the second category, and the blocks that contain data of the second category containing data concerning which of the blocks contain data according to the third category.

7. A cell broadcast signal according to any preceding claim wherein the rates are variable with time.

8. A method of broadcasting system information for user terminals in a cellular telecommunications system, the information being classified into data of different categories, comprising transmitting the data of each said category at an individual rate according to respective priorities associated with the category.

9. A user terminal to receive a cell broadcast signal containing system information for user terminals in a cell of cellular telecommunications system, the information being classified into data of different categories that are transmitted at individual rates according to respective priorities associated with the categories, the user terminal comprising a receiver to receive the cell broadcast signal and decode the data therein classified according to said categories.

10. A method of receiving a cell broadcast signal containing system information for user terminals in a cell of cellular telecommunications system, the information being classified into data of different categories that are transmitted at individual rates according to respective priorities associated with the categories, the method decoding the data according to said categories from the cell broadcast signal.

11. A transmitting station for a mobile telecommunications system including a transmitter configured to transmit at least one cell broadcast signal according to any one of claims 1 to 8.

12. A method of transmitting a cell broadcast signal for a mobile telecommunications system including transmitting data for at least one cell broadcast signal according to any one of claims 1 to 8, towards an earth orbiting satellite for onward transmission to user terminals in at least one cell.

13. A cell broadcast signal containing system information for user terminals in a cellular telecommunications system, the information being classified into data of first and second different categories which is transmitted in blocks at individual rates according to respective priorities associated with the categories, wherein blocks containing data of the second priority contain information indicating when a block containing data according to the first priority will occur.
